# EUROPÄISCHE PATENTSCHRIFT

(11) **EP 0 537 440 B1**
(45) Veröffentlichungstag und Bekanntmachung des Hinweises auf die Patenterteilung: **21.02.1996**
(21) Anmeldenummer: 92113859.0
(22) Anmeldetag: 14.08.1992
(51) Int. Cl.: F16K 31/06, F16K 11/07

(54) **Fluidisches Stetigventil mit Verriegelungseinheit**
Fluid valve with a locking unit
Vanne fluide avec unité de verrouillage

(30) Priorität: 14.09.1991 DE 4130638
(43) Veröffentlichungstag der Anmeldung: 21.04.1993
(73) Patentinhaber: ROBERT BOSCH GMBH, D-70442 Stuttgart (DE)
(72) Erfinder: Schuttenberg, Eckard, W-7000 Stuttgart 80 (DE)

(56) Entgegenhaltungen:
- EP-A- 0 117 207
- DE-A- 3 925 771
- DE-B- 1 218 835
- GB-A- 2 159 249

## Beschreibung

### Stand der Technik

Die Erfindung geht aus von einem fluidischen Stetigventil mit einer Verriegelungseinheit nach der Gattung des Hauptanspruchs.

Es ist schon ein derartiges fluidisches Stetigventil mit einer elektromagnetischen Verriegelungseinheit aus der DE-AS 12 18 835 bekannt, das bei Stromausfall ein bestimmtes Ausfallverhalten aufweist. Bei diesem Stetigventil wird das von einer Feder auf seinen Sitz gedrückte Ventilglied von einem Elektromotor über ein aufwendiges Gestänge nach Art eines Fliehkraftreglers in Längsrichtung verstellt und dabei geöffnet. In geöffneter Endstellung liegt ein am Stellglied befestigter Anker an einer Magnetspule der Verriegelungseinheit an, welche bei abgeschaltetem Elektromotor das Ventil offenhält, solange der Verriegelungsmagnet bestromt wird. Bei Stromausfall wird hier das Ventilglied entriegelt und das Stetigventil durch Federkraft geschlossen. Neben der aufwendigen Bauweise ist bei diesem Stetigventil vor allem von Nachteil, daß mit dieser Verriegelungseinheit die Beibehaltung eines eingestellten beliebigen Betriebszustandes nicht möglich ist. Es kann daher kein Ausfallverhalten erreicht werden, bei dem bei Stromausfall, bei Kabelbruch oder bei NOT-AUS zum Beispiel eine Durchflußrichtung, ein Betriebsdruck oder eine Position arretiert werden kann. Besonders von Nachteil ist dies bei der Drucksteuerung in hydraulischen Spannvorrichtungen, wo bei Ausfall der Versorgungsspannung der an einem Proportional-Druckregelventil eingestellte Druck abfallen kann und dabei das aus einer sich öffnenden Spannvorrichtung herausfallende Werkstück eine Unfallgefahr hervorrufen kann.

Ferner ist aus der EP 0 117 207 A1 ein fluidisches Stetigventil in einer Bauweise als Wegeventil bekannt, bei welchem der Antrieb des Regelschiebers über einen Schrittmotor erfolgt. Bei derartigen Stetigventilen wird durch die Verwendung von selbsthemmenden Getrieben zwar ein Ausfallverhalten erreicht, bei dem der jeweils eingestellte Betriebszustand arretiert wird. Stetigventile mit derartigen Schrittmotoren bauen aber relativ aufwendig und haben andere, bauartbedingte Nachteile wie zum Beispiel lange Stellzeiten.

### Vorteile der Erfindung

Das erfindungsgemäße fluidische Stetigventil mit einer Verriegelungseinheit mit den kennzeichnenden Merkmalen des Hauptanspruchs hat demgegenüber den Vorteil, daß es bei Signalausfall, insbesondere Stromausfall, mit relativ einfachen Mitteln eine Arretierung eines eingestellten Betriebszustandes ermöglicht. Stetigventile mit einer derartigen Verriegelungseinheit können daher in sicherheits-relevanten Bereichen eingesetzt werden. Insbesondere kann bei Stromausfall, bei Kabelbruch oder bei NOT-AUS erreicht werden, daß bei dem Stetigventil eine eingestellte Durchflußrichtung, ein Betriebsdruck oder eine Position beibehalten wird. Dabei wird durch die Verriegelungseinheit die Dynamik der Stetigventile nicht beeinflußt, wobei vor allem die mit Proportionalmagneten arbeitenden Ventile kürzere Stellzeiten aufweisen als Ventile mit elektromotorischer Verstellung. Fernerhin baut die Verriegelungseinheit einfach und kompakt und hat durch die Klemmung quer zur Bewegungsrichtung einen guten Wirkungsgrad.

Durch die in den Unteransprüchen aufgeführten Maßnahmen sind vorteilhafte Weiterbildungen und Verbesserungen des im Hauptanspruch angegebenen Stetigventils mit Verriegelungseinheit möglich. Besonders vorteilhaft sind Ausbildungen nach den Ansprüchen 2 und 3, wodurch sich die Klemmwirkung, der Platzbedarf für die Verriegelungseinrichtung sowie deren Lebensdauer günstig beeinflussen läßt. Zweckmäßig ist ferner eine Ausbildung nach Anspruch 4, wodurch neben dem reinen Kraftschluß in der einen Richtung ein zusätzlicher Formschluß in der entgegengesetzten Richtung erreicht wird, was gerade bei Druckregelventilen vorteilhaft dazu verwendbar ist, um eine unerwünschte Drucksenkung zu vermeiden. Vorteilhaft ist es, wenn gemäß Anspruch 5 die Verriegelungseinheit in einem gesonderten Gehäuse ausgebildet wird, so daß sie sich besonders leicht zum Nachrüsten bei vorhandenen Proportionalventilen eignet. Eine äußerst zweckmäßige Bauweise der Verriegelungseinheit ergibt sich gemäß Anspruch 6, wodurch sich eine kompakte, robuste und einfache Bauweise erzielen läßt. Gemäß den Ansprüchen 7 bis 10 lassen sich besonders zweckmäßige Ausgestaltungen der Verriegelungseinheit erreichen. Günstig ist ferner eine Ausbildung des Stetigventils nach Anspruch 11, wodurch sich neben einer wirkungsvollen, genauen Klemmung eine hohe Lebensdauer erzielen läßt. Zweckmäßig ist ferner eine Ausbildung nach Anspruch 12, wodurch der Einbauraum nur unwesentlich vergrößert wird, da ein ansonsten benötigter Deckel und die Schraubenkopflänge entfallen können. Zudem benötigt diese Ausbildung große Variationsmöglichkeiten, da die Verriegelungseinheit leicht mit den anderen Bauelementen wie Proportionalmagnet, Ventileinheit oder Wegaufnehmer kombinierbar ist. Ferner sind Ausbildungen der Stetigventile nach den Ansprüchen 13 bis 15 vorteilhaft. Bei derartigen Stetigventilen kann die Schließzeit eines Verriegelungsmagneten auf ein Minimum reduziert werden, indem man am Proportionalmagnet des Stetigventils eine um die Einschaltzeit des Entriegelungsmagneten zeitliche Verzögerung vorsieht. Ferner ermöglicht die Ausführung mit zwei Magneten eine logische Signalverarbeitung, die mehr Sicherheit ergibt, da zwei Signale zur Verfügung stehen. Besonders vorteilhaft ist ferner eine Ausbildung nach Anspruch 16, wodurch die mechanisch aufgebrachte Kraft zusätzlich hydraulisch unterstützt werden kann. Zweckmäßige Ausgestaltungen der hydraulischen Einrichtung zur Klemmkraft-Verstärkung ergeben sich aus den Ansprüchen 17 und 18.

### Zeichnung

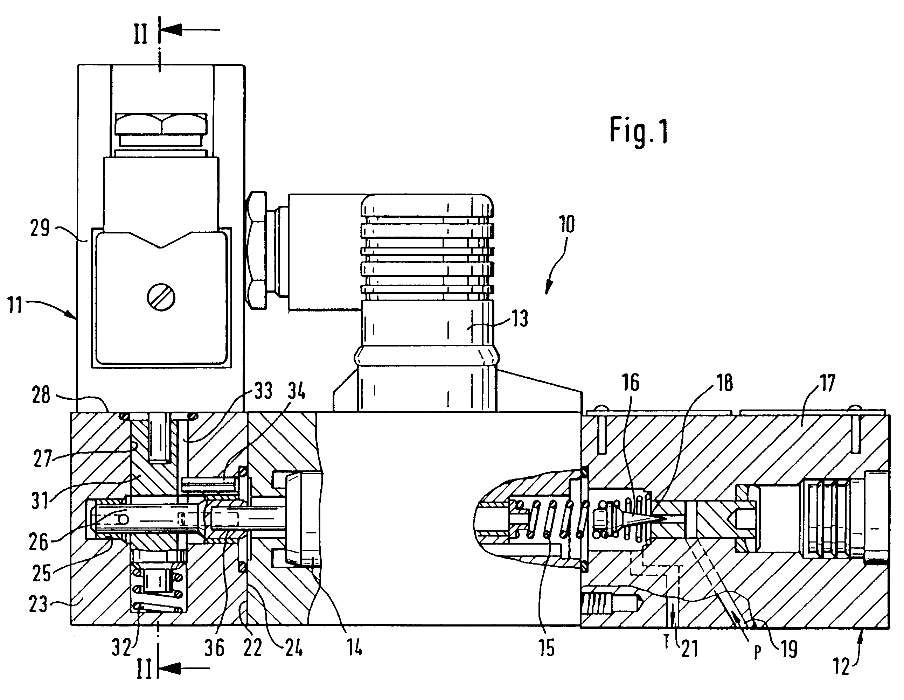

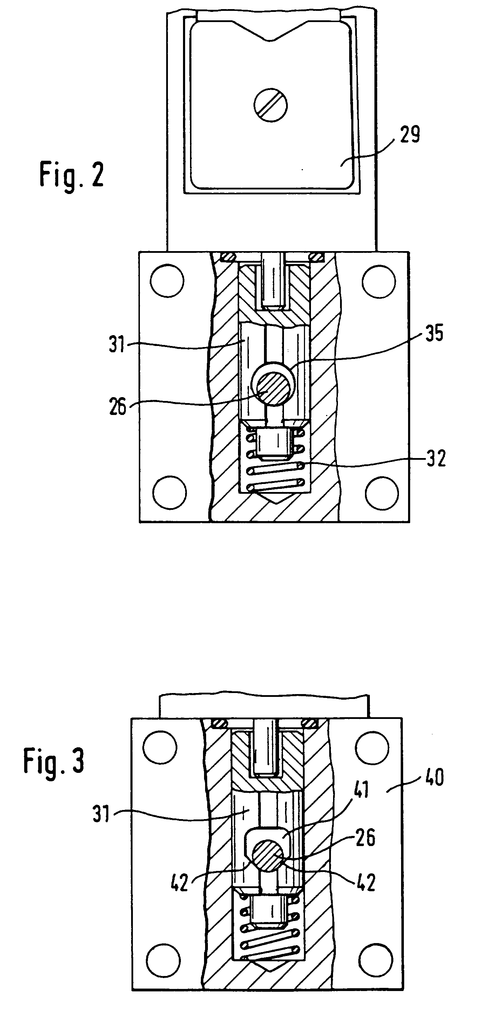

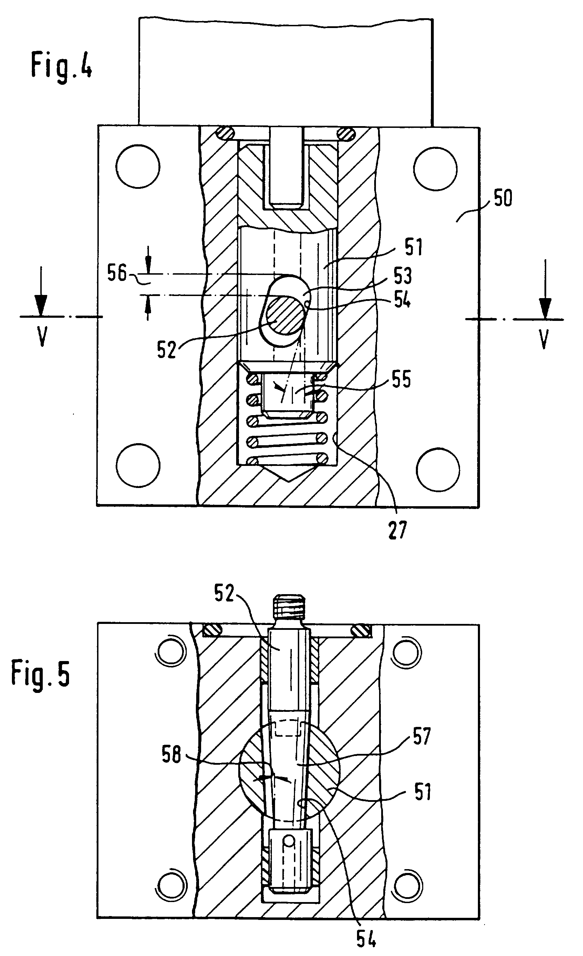

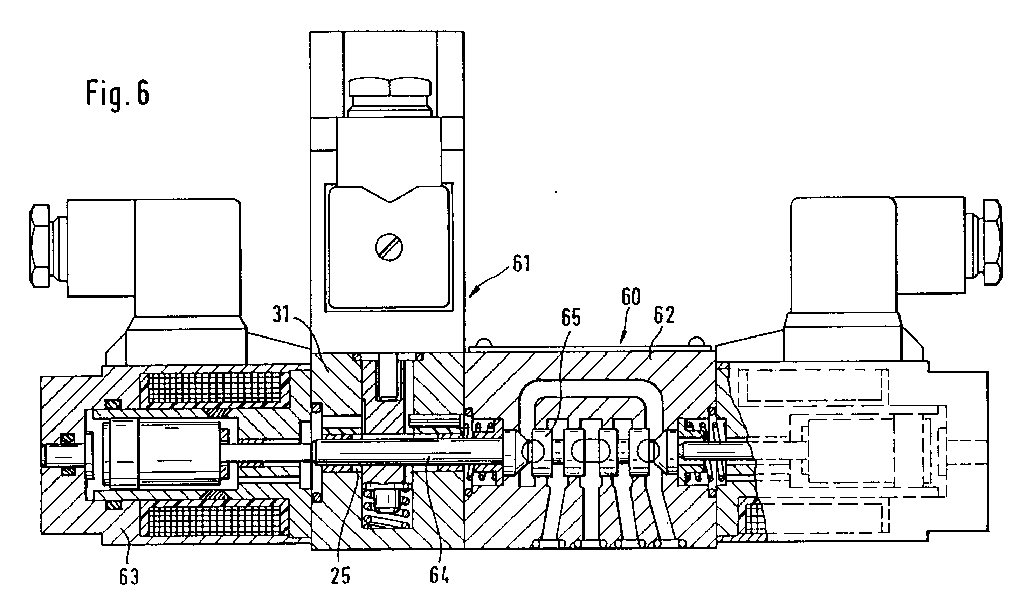

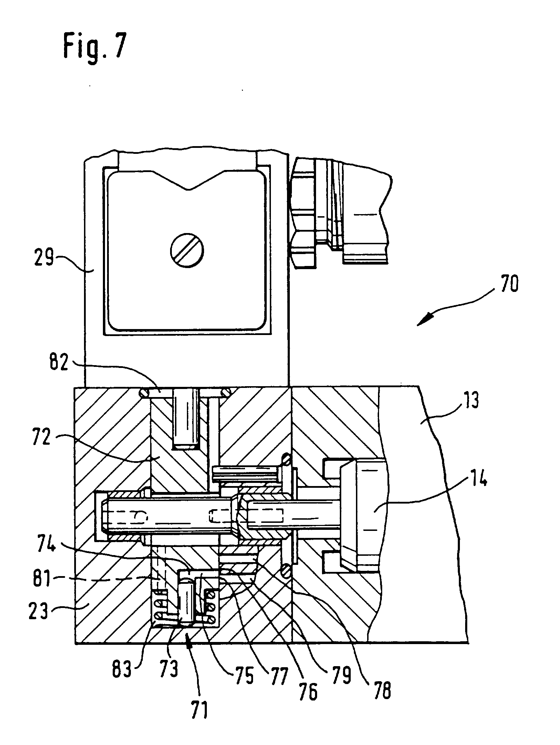

Fünf Ausführungsbeispiele der Erfindung sind in der Zeichnung dargestellt und in der nachfolgenden Beschreibung näher erläutert. Es zeigen Figur 1 als erstes Ausführungsbeispiel einen teilweisen Längsschnitt durch ein fluidisches Stetigventil mit Verriegelungseinheit, wobei das Stetigventil als Proportional-Druckbegrenzungsventil ausgebildet ist, Figur 2 einen teilweisen Querschnitt nach II-II in Figur 1, Figur 3 einen teilweisen Querschnitt durch eine zweite Ausführungsform der Verriegelungseinheit, Figur 4 einen teilweisen Querschnitt durch eine dritte Ausführungsform der Verriegelungseinheit in vergrößertem Maßstab, Figur 5 einen Teilschnitt nach V-V in Figur 4, und Figur 6 einen teilweisen Längsschnitt durch eine vierte Ausführungsform des Stetigventils, das hier als Proportional-Wegeventil ausgeführt ist. Figur 7 zeigt eine fünfte Ausführungsform der Verriegelungseinheit mit hydraulischer Klemmkraft-Unterstützung.

### Beschreibung der Ausführungsbeispiele

Die Figur 1 zeigt als erstes Ausführungsbeispiel eines fluidischen Stetigventils ein Proportional-Druckbegrenzungsventil 10 mit einer angebauten, elektromagnetischen Verriegelungseinheit 11.

Bei dem Proportional-Druckbegrenzungsventil 10 handelt es sich um ein Ventil an sich bekannter Bauart, das im wesentlichen aus der eigentlichen Ventileinheit 12 und einem daran angebauten Proportionalmagneten 13 besteht. Der Proportionalmagnet 13 weist einen längsbeweglichen Anker 14 auf, der über eine Regelfeder 15 auf einen Ventilkegel 16 der Ventileinheit 12 einwirkt. Der Ventilkegel 16 arbeitet mit einem im Ventilgehäuse 17 angeordneten Ventilsitz 18 zusammen und steuert die Verbindung zwischen einem mit P bezeichneten Zulaufanschluß 19 und einem mit T bezeichneten Rücklaufanschluß 21.

An der von der Ventileinheit 12 abgewandten Stirnseite 22 des Proportionalmagneten 13 ist die Verriegelungseinheit 11 angebaut. Die Verriegelungseinheit 11 hat ein quaderförmiges Gehäuse 23, das mit einer stirnseitigen Flanschfläche 24 an der Stirnseite 22 anliegt. Im Gehäuse 23 ist eine sacklochartig ausgebildete, abgesetzte und zur Flanschfläche 24 hin offene Längsbohrung 25 angeordnet, in der eine koaxial zum Anker 14 des Proportionalmagneten 13 angeordnete Klemmachse 26 gleitend geführt ist. Die Längsbohrung 25 wird von einer senkrecht zu ihr verlaufenden Querbohrung 27 durchdrungen, die nach oben hin zu einer Anbaufläche 28 am Gehäuse 23 offen ist. An der Anbaufläche 28 ist ein Verriegelungsmagnet 29 angeflanscht. In der Querbohrung 27 ist ein Verriegelungsschieber 31 gleitend geführt, der von einer Druckfeder 32 nach oben in Richtung einer Verriegelungsstellung belastet ist und von dem Magneten 29 gegen die Kraft der Druckfeder 32 nach unten in Richtung einer Entriegelungsstellung verstellbar ist. Eine Längsnut 33 am Verriegelungsschieber 31 sowie ein gehäusefester Spannstift 34 sichern den Verriegelungsschieber 31 in seiner Drehlage. Zugleich dient die Längsnut 33 als Druckausgleich zwischen Ober- und Unterseite des Schiebers 31.

Wie die Figur 1 in Verbindung mit Figur 2 näher zeigt, weist der Verriegelungsschieber 31 im Bereich der Längsbohrung 25 eine Ausnehmung auf, die hier als zylindrische Bohrung 35 ausgebildet ist.

Durch diese zylindrische Bohrung 35 ist die Klemmachse 26 hindurchgeführt, wobei der Durchmesser der Bohrung 35 um einiges größer ausgeführt ist als derjenige der Klemmachse 26. Die Klemmachse 26 ist über eine Schraubverbindung 36 fest mit dem Anker 14 des Proportionalmagneten 13 verbunden, so daß sie alle seine Längsbewegungen mitmacht. Ferner ist die Klemmachse 26 beiderseits des Verriegelungsschiebers 31 im Gehäuse 23 gleitend geführt und längsverschiebbar gelagert.

Bei der in Figur 1 und Figur 2 dargestellten Verriegelungsstellung wird bei nicht bestromten Verriegelungsmagneten 29 der Verriegelungsschieber 31 durch die Kraft der Druckfeder 32 gegen die Klemmachse 26 gedrückt. Die hierbei als Klemmfläche dienende Innenwand der zylindrischen Bohrung 35 stützt sich dabei im Querschnitt nach Figur 2 gesehen an einem Punkt und im Längsschnitt nach Figur 1 gesehen längs einer Linie auf der Klemmachse 26 ab. Die kraftschlüssig arbeitende Verriegelungseinheit 11 erzeugt hierdurch so große Klemmkräfte, daß der Anker 14 des Proportionalmagneten 13 auf jeden Fall in seiner jeweiligen Stellung gehalten wird.

Die Wirkungsweise des Proportional-Druckbegrenzungsventils 10 mit seiner elektromagnetischen Verriegelungseinheit 11 wird wie folgt erläutert:
Wenn der Proportionalmagnet 13 bestromt wird, wirkt dessen Anker 14 auf die Regelfeder 15, welche wiederum den Ventilkegel (16) gegen einen Ventilsitz 18 drückt. Je nach Hubweg ergibt sich eine Federvorspannung und somit ein bestimmter Öffnungsdruck des Druckbegrenzungsventils 10. Um einen Betriebsdruck einzustellen, werden der Proportionalmagnet 13 und der Verriegelungsmagnet 29 bestromt. Bei Inbetriebnahme bzw. nach Not-Aus ist es sinnvoll, zuerst den Verriegelungsmagneten 29 zu entriegeln und dann den Proportional-Magnet 13 zu bestromen. Ein Anker des Verriegelungsmagneten 29 verschiebt den Verriegelungsschieber 31 gegen die Kraft der Druckfeder 32 nach unten, in eine Entriegelungsstellung, wodurch die Klemmachse 26 frei wird und damit der Hubbewegung des Magnetankers 14 des Proportionalmagneten 13 folgen kann. Durch eine logische Signalverknüpfung läßt sich erreichen, daß bei Stromausfall am Proportionalmagnet 13 und/oder Verriegelungsmagnet 29 die Klemmachse 26 mechanisch verriegelt wird und damit der jeweils eingestellte Betriebsdruck beibehalten wird.

Die Figur 3 zeigt einen teilweisen Querschnitt durch eine zweite Verriegelungseinheit 40, die sich von der ersten Verriegelungseinheit 11 nach Figur 1 bzw. 2 wie folgt unterscheidet, wobei für gleiche Bauelemente gleiche Bezugszeichen verwendet werden. Der Verriegelungsschieber 31 weist anstelle einer zylindrischen Bohrung eine im wesentlichen rechteckförmige Aussparung 41 auf, deren untere Begrenzungsseite aus zwei zueinander abgewinkelt verlaufenden, im wesentlichen eine V-Form bildenden Klemmflächen 42 besteht. Auf diese Weise wird eine Zweipunkt-Anlage des Verriegelungsschiebers 31 an der Klemmachse 26 erreicht, ohne dabei die Linienberührung aufzugeben. Dadurch lassen sich günstigere Klemmeigenschaften erreichen.

Die Figur 4 zeigt als dritte Ausführungsform einen teilweisen Querschnitt durch eine Verriegelungseinheit 50, die sich von der ersten Verriegelungseinheit nach Figur 1 bzw. 2 wie folgt unterscheidet, wobei für gleiche Bauelemente gleiche Bezugszeichen verwendet werden: Die Verriegelungseinheit 50 weist einen anderen Verriegelungsschieber 51 sowie eine andere Klemmachse 52 auf. Bei dem Verriegelungschieber 51 ist die zur Durchführung der Klemmachse 52 dienende Ausnehmung im Querschnitt nach Figur 4 gesehen als schräg zur Längsachse des Verriegelungsschiebers 51 verlaufende Nut 53 angeordnet, deren eine, als Klemmfläche 54 dienende Seitenwand einen spitzen Winkel mit der Schieberachse bildet. Die Nut 53 ist im Querschnitt so groß ausgebildet, daß sie beim Entriegeln der Klemmachse 52 einen ausreichend großen Freihub 56 für den Verriegelungsschieber 51 ermöglicht. Durch die schräge Ausbildung der Nut 53 und damit der Klemmfläche 54 läßt sich eine Keilwirkung erzielen, die eine wesentliche Steigerung der Klemmkraft bewirkt.

Wie die Figur 5 als Teilschnitt nach V-V in Figur 4 näher zeigt, weist die Klemmachse 52 in ihrem die Ausnehmung 53 durchdringenden Bereich einen konischen Abschnitt 57 auf, der mit einem Neigungswinkel 58 ausgebildet ist. Den gleichen Neigungswinkel weist auch die Klemmfläche 54 auf, so daß entlang des konischen Abschnitts 57 im Anlagebereich eine Linienberührung entsteht. Dabei wird durch die Verjüngungsrichtung des konischen Abschnitts 57 zusätzlich erreicht, daß die Bewegungsrichtung der Klemmachse 52 in Richtung Druckminderung verhindert wird; es besteht daher in Richtung Druckminderung eine formschlüssige Verriegelung, während die Verriegelung in der entgegengesetzten Richtung nur kraftschlüssig ausgebildet ist.

Die Figur 6 zeigt einen Längsschnitt durch ein Proportional-Wegeventil 60 mit einer vierten elektromagnetischen Verriegelungseinheit 61, wobei die Verriegelungseinheit 61 zwischen das eigentliche 4/3-Wegeventil 62 und einen Proportionalmagneten 63 geschaltet ist. Die Verriegelungseinheit 61 hat zu diesem Zweck eine durchgehende Längsbohrung 25, in welcher eine Klemmachse 64 längsverschiebbar angeordnet ist. Diese Klemmachse 64 ist fest mit dem Regelschieber 65 des Wegeventils 62 verbunden. Bei Stromausfall wird die vierte Verriegelungseinheit 61 über die Klemmachse 64 den Regelschieber 65 in seiner jeweiligen Lage arretieren, so daß die jeweils eingestellte Strömungsrichtung bzw. auch die Durchflußmenge im Sicherheitsfall beibehalten werden.

Die Figur 7 ziegt einen teilweisen Längsschnitt durch eine fünfte Verriegelungseinheit 70, die sich von der ersten Verriegelungseinheit 11 nach Figur 1 vor allem durch eine hydrauliche Einrichtung 71 zur Unterstützung der Klemmkraft der Feder 32 unterscheidet, wobei im übrigen für gleiche Bauelemente gleiche Bezugszeichen verwendet werden.

Die Verriegelungseinheit 70 weist einen anderen Verriegelungsschieber 72 auf, in dem auf der der Druckfeder 32 zugewandten Seite ein zusätzlicher Druckkolben 73 angeordnet ist. Der Druckkolben 73 stützt sich einerseits am Gehäuse 23 ab und begrenzt andererseits einen Druckraum 74, von dem eine Steuerbohrung 75 radial zur Längsachse des Verriegelungsschiebers 72 in dessen Mantelfläche führt. Die Öffnung der Steuerbohrung 75 bildet in der Mantelfläche zwei Steuerkanten 76, 77, von denen eine erste (76) die Verbindung zu einem Druckversorgungskanal 78 im Gehäuse 23 und eine zweite (77) Steuerkante die Verbindung zu einem Druckmittelablaufkanal 79 im Gehäuse 23 steuern. Im bestromten Zustand des Verriegelungsmagnets 29 - wie in Figur 7 näher dargestellt - bildet die erste Steuerkante 76 mit dem Druckversorgungskanal 78 eine positive Überdeckung, während die zweite Steuerkante 77 mit dem Druckmittelablaufkanal 79 eine negative Überdeckung bildet, so daß der Druckraum 74 über den Druckmittelablaufkanal 79 entlastet ist. Dabei ist die positive Überdeckung größer ausgebildet als die negative Überdeckung.

Der Verriegelungsschieber 72 weist ferner eine axiale Ausgleichsbohrung 81 auf, über welche die beiden stirnseitigen Kammern 82, 83 miteinander hydraulisch verbunden sind, so daß der Verriegelungsschieber 72 selbst hydraulisch druckausgeglichen ist.

Mit der Einrichtung 71 wird eine hydraulische Unterstützung der Klemmkraft der Feder 32 erreicht. Bei Not-Aus drückt die Feder 32 den Verriegelungsschieber 72 gegen den stromlosen Magneten 29 nach oben. Die erste Steuerkante 76 öffnet dabei die Verbindung zum Druckversorgungskanal 78 erst, nachdem die zweite Steuerkante 77 die Entlastung zum Ablaufkanal 79 blockiert hat. Drucköl strömt in den Druckraum 74 und bewirkt eine Kraft auf den Verriegelungsschieber 72 nach oben gegen die Klemmachse 26. Dadurch wird eine zur Federkraft zusätzliche Klemmkraft aufgebracht. Die Größe der hydraulischen Kraftunterstützung läßt sich durch den Querschnitt des Druckkolbens 73 bestimmen. Für eine sichere Verriegelung kann daher die mechanische Kraft kleiner ausgelegt werden.

Selbstverständlich sind an den gezeigten Ausführungsformen Änderungen möglich, ohne vom Gedanken der Verbindung abzuweichen. Auch wenn die Anordnung der Verriegelungseinheit in einem eigenen Gehäuse besonders vorteilhaft ist, können deren Bauelemente auch in andere Funktionsgruppen integriert werden. So läßt sich z. B. bei einem Druckventil die Klemmung nicht nur am Anker, wie in Figur 1 gezeigt, vornehmen, sondern kann auch unmittelbar am Ventilkegel oder an einem beweglichen Ventilsitz oder in geeigneter Weise an einem Federteller vorgenommen werden. Bei einem Proportional-Wegeventil läßt sich die Verriegelungseinheit relativ einfach mit den verschiedenen Baueinheiten, wie Wegeventil, Proportionalmagnet, Wegaufnehmer in unterschiedlichen Variationen kombinieren. Fener kann auch die Einrichtung zur hydraulischen Unterstützung der Klemmkraft in anderer Weise ausgebildet werden. Bei der Ausführung nach Figur 1 kann es auch zweckmäßig sein die Klemmachse 26 einstückig mit der Magnetankerachse bzw. dem Anker 14 auszubilden.

## Patentansprüche

1. Fluidisches Stetigventil mit einer insbesondere elektromagnetischen Verriegelungseinheit, die bei ausfallendem Überwachungssignal, insbesondere Stromausfall, das Ausfallverhalten des fluidischen Ventils beeinflußt, bei dem ein längsbewegliches Stellglied von einer Antriebskraft gegen die Kraft einer rückstellenden Feder auslenkbar ist, dadurch gekennzeichnet, daß die Verriegelungseinheit (11; 40; 50; 61; 70) einen quer zum längsbeweglichen Stellglied (26, 14; 52; 64; 65) angeordneten Verriegelungsschieber (31; 51; 72) aufweist, der von einer Feder (32) in Richtung einer Verriegelungsstellung und von einer Gegenkraft in Richtung einer Entriegelungsstellung belastbar ist und daß der Verriegelungsschieber (31; 51; 72) das längsbewegliche Stellglied (26;14;52;64;65) in jeder beliebigen Stellung durch mechanischen Kraftschluß zwischen beiden Teilen (26, 14; 52; 64; 31; 51) verriegeln kann.

2. Stetigventil nach Anspruch 1, dadurch gekennzeichnet, daß der Kraftschluß zwischen beiden Teilen (26; 14; 52; 64; 65; 31; 51) in Form einer Linienberührung ausgebildet ist.

3. Stetigventil nach Anspruch 1 oder 2, dadurch gekennzeichnet, daß der Kraftschluß zwischen beiden Teilen (51;52) mit einer die Klemmkraft steigernden Keilwirkung (55) ausgebildet ist (Fig. 4).

4. Stetigventil nach Anspruch 3, dadurch gekennzeichnet, daß das längsbewegliche Stellglied (52) im Bereich des Kraftschlusses mit einem konischen Abschnitt (57) ausgebildet ist und die zugehörige Klemmfläche (54) am Verriegelungsschieber (51) entsprechend schräg zur Längsachse des Stellglieds (52) ausgerichtet ist (Fig. 5).

5. Stetigventil nach einem oder mehreren der Ansprüche 1 bis 4, dadurch gekennzeichnet, daß die Verriegelungseinheit (11; 40; 51; 61) in einem vom Ventil (10;62) gesonderten Gehäuse (23) ausgebildet ist.

6. Stetigventil nach Anspruch 5, dadurch gekennzeichnet, daß im Gehäuse (23) eine Klemmachse (26; 52) gleitend geführt ist, die mit dem längsbeweglichen Stellglied (14; 65) fest gekoppelt ist, und die den Verriegelungsschieber (31; 51) in einer im Verriegelungsschieber angeordneten Ausnehmung (35; 41; 53) durchdringt.

7. Stetigventil nach Anspruch 6, dadurch gekennzeichnet, daß die Ausnehmung im Verriegelungsschieber (31) als zylindrische Bohrung (35) und die Klemmachse (21) als zylindrischer Bolzen mit gegenüber der ersten Bohrung (35) kleinerem Durchmesser ausgebildet ist.

8. Stetigventil nach Anspruch 6, dadurch gekennzeichnet, daß die Ausnehmung (41) im Verriegelungsschieber (31) wenigstens zwei zueinander abgewinkelt, in V-Form verlaufende Klemmflachen (42) aufweist, die in Verriegelungsstellung an der als zylindrischer Bolzen ausgebildeten Klemmachse (26) anliegen (Fig. 3).

9. Stetigventil nach Anspruch 6, dadurch gekennzeichnet, daß die Ausnehmung als eine schrag zur Längsachse des Verriegelungsschiebers (51) angeordnete Nut (53) ausgebildet ist, deren als Klemmfläche (54) wirkende Seitenwände die Keilwirkung erzeugen.

10. Stetigventil nach Anspruch 9, dadurch gekennzeichnet, daß an der Klemmachse (52) der konische Abschnitt (57) angeordnet ist und die klemmende Seitenwand (54) den entsprechenden Neigungswinkel (58) relativ zur Längsachse der Klemmachse (52) aufweist.

11. Stetigventil nach einem der Anspruch 6 bis 10, dadurch gekennzeichnet, daß die Klemmachse (26;52;64) im Gehäuse (23) beiderseits des Verriegelungsschiebers (31;51) gelagert ist.

12. Stetigventil nach einem der Ansprüche 6 bis 11, dadurch gekennzeichnet, daß das Gehäuse (23) der Verriegelungseinheit (11; 40; 50; 61) quaderförmig ausgebildet ist, eine zu mindestens einer stirnseitigen Flanschfläche (24) hin offene, die Klemmachse (26; 52; 64) aufnehmende Längsbohrung (25) und eine dazu quer verlaufende, den Verriegelungsschieber (31; 51) aufnehmende Querbohrung (27) aufweist, die zu einer Anbaufläche (28), insbesondere für den Verriegelungs-Magnet (29), hin offen ist.

13. Stetigventil nach einem der Ansprüche 1 bis 12, dadurch gekennzeichnet, daß es einen die Antriebskraft für das längsbewegliche Stellglied erzeugenden Proportionalmagnet (13;63) aufweist.

14. Stetigventil nach Anspruch 13, dadurch gekennzeichnet, daß die Verriegelungseinheit (11) an einem Proportionalmagnet (13) eines elektrohydraulischen Druckregelventils (10) angebaut ist.

15. Stetigventil nach Anspruch 13, dadurch gekennzeichnet, daß die Verriegelungseinheit (61) bei einem Proportionalwegeventil (60) zwischen dessen Ventileinheit (62) und einem Proportionalmagnet (63) angeordnet ist.

16. Stetigventil nach einem oder mehreren der Ansprüche 1 bis 15, dadurch gekennzeichnet, daß eine die klemmende Kraft der Feder (32) auf den Verriegelungsschieber (72) unterstützende hydraulische Einrichtung (71) vorgesehen ist.

17. Stetigventil nach Anspruch 16, dadurch gekennzeichnet, daß die Einrichtung (71) einen Druckkolben (73) aufweist, der sich am Gehäuse (23) der Verriegelungseinheit (70) abstützt und im Verriegelungsschieber (72) einen Druckraum (74) begrenzt, von dem eine Steuerbohrung (75) in die Mantelfläche des Verriegelungsschiebers (75) führt, und daß das Gehäuse (23) einen Druckversorgungskanal (78) und einen Druckmittelablaufkanal (79) aufweist, die abhängig von der Stellung des Verriegelungsschiebers (72) abwechselnd mit der Steuerbohrung (75) verbindbar sind.

18. Stetigventil nach Anspruch 17, dadurch gekennzeichnet, daß die Steuerbohrung (75) in der Mantelfläche zwei Steuerkanten (76, 77) bildet, von denen eine erste, der Verbindung zum Druckversorgungskanal (78) zugeordnete Steuerkante (76) in bestromten Zustand des Verriegelungsmagneten (29) diese Verbindung mit positiver Überdeckung sperrt, während die andere, zweite Steuerkante (77) relativ zum Druckmittelablaufkanal (79) mit negativer Überdeckung ausgebildet ist.

## Claims

1. Fluid valve, having an, in particular, electromagnetic locking unit which, in the event of a failure of a monitoring signal, in particular current failure, influences the failure behaviour of the fluid valve, in which a longitudinally movable actuator can be deflected by a driving force counter to the force of a restoring spring, characterized in that the locking unit (11; 40; 50; 61; 70) has a locking slide (31; 51; 72) which is arranged transversely to the longitudinally movable actuator (26, 14; 52; 64; 65) and can be loaded by a spring (32) in the direction of a locking position and by a counter-force in the direction of an unlocking position, and in that the locking slide (31; 51; 72) can lock the longitudinally movable actuator (26; 14; 52; 64; 65) in any desired position by a mechanical frictional connection between the two parts (26, 14; 52; 64; 31; 51).

2. Valve according to Claim 1, characterized in that the frictional connection between the two parts (26; 14; 52; 64; 65; 31; 51) is produced in the form of a linear contact.

3. Valve according to Claim 1 or 2, characterized in that the frictional connection between the two parts (51; 52) is produced by a wedge effect (55) which increases the clamping force (Figure 4).

4. Valve according to Claim 3, characterized in that the longitudinally movable actuator (52) is designed with a conical section (57) in the region of the frictional connection, and the associated clamping surface (54) on the locking slide (51) is correspondingly aligned obliquely to the longitudinal axis of the actuator (52) (Figure 5).

5. Valve according to one or more of Claims 1 to 4, characterized in that the locking unit (11; 40; 51; 61) is formed in a housing (23) which is separate from the valve (10; 62).

6. Valve according to Claim 5, characterized in that a clamping axle (26; 52) is guided in a sliding manner in the housing (23), which clamping axle is fixedly coupled to the longitudinally movable actuator (14; 65), and which passes through the locking slide (31; 51) in a cutout (35; 41; 53) arranged in the locking slide.

7. Valve according to Claim 6, characterized in that the cutout in the locking slide (31) is designed as a cylindrical bore (35), and the clamping axle (21) is designed as a cylindrical bolt with a smaller diameter than the first bore (35).

8. Valve according to Claim 6, characterized in that the cutout (41) in the locking slide (31) has at least two clamping surfaces (42) which are bent towards one another, extend in a V-shape and, in the locking position, rest against the clamping axle (26) designed as a cylindrical bolt (Figure 3).

9. Valve according to Claim 6, characterized in that the cutout is designed as a groove (53) which is arranged obliquely relative to the longitudinal axis of the locking slide (51) and whose side walls acting as clamping surface (54) produce the wedge effect.

10. Valve according to Claim 9, characterized in that the conical section (57) is arranged on the clamping axle (52), and the clamping side wall (54) has the corresponding angle of inclination (58) relative to the longitudinal axis of the clamping axle (52).

11. Valve according to one of Claims 6 to 10, characterized in that the clamping axle (26; 52; 64) is mounted in the housing (23) on both sides of the locking slide (31; 51).

12. Valve according to one of Claims 6 to 11, characterized in that the housing (23) of the locking unit (11; 40; 50; 61) is of cuboid design, has a longitudinal bore (25), which is open towards at least one end-face flange surface (24) and receives the clamping axle (26; 52; 64), and a transverse bore (27) which runs transversely thereto, receives the locking slide (31; 51) and is open towards an attachment surface (28), in particular for the locking magnet (29).

13. Valve according to one of Claims 1 to 12, characterized in that it has a proportional magnet (13;63) which produces the driving force for the longitudinally movable actuator.

14. Valve according to Claim 13, characterized in that the locking unit (11) is attached to a proportional magnet (13) of an electrohydraulic pressure control valve (10).

15. Valve according to Claim 13, characterized in that the locking unit (61) is arranged in a proportional directional valve (60) between its valve unit (62) and a proportional magnet (63).

16. Valve according to one or more of Claims 1 to 15, characterized in that a hydraulic device (71) is provided, which assists the clamping force of the spring (32) on the locking slide (72).

17. Valve according to Claim 16, characterized in that the device (71) has a pressure piston (73) which is supported on the housing (23) of the locking unit (70) and bounds a pressure space (74) in the locking slide (72), from which pressure space a control bore (75) leads into the outer surface of the locking slide (75), and in that the housing (23) has a pressure supply channel (78) and a pressure-medium outlet channel (79), which channels can be connected alternately to the control bore (75) depending on the position of the locking slide (72).

18. Valve according to Claim 17, characterized in that the control bore (75) forms two control edges (76, 77) in the outer surface, of which control edges a first control edge (76), assigned to the connection to the pressure supply channel (78), locks the said connection with positive covering in the electrified state of the locking magnet (29), while the other, second control edge (77) is designed with negative covering relative to the pressure-medium outlet channel (79).

## Revendications

1. Vanne continue, pour fluide comportant notamment une unité de verrouillage électromagnétique et qui en cas de disparition du signal de surveillance, notamment en cas de coupure de courant, influence le comportement de secours de la vanne continue, vanne dans laquelle un organe de réglage mobile longitudinalement est déplacé par une force d'entraînement contre la force d'un ressort de rappel, caractérisée en ce que l'unité de verrouillage (11, 40, 50, 61, 70) comporte un tiroir de verrouillage (31, 51, 72) disposé transversalement à l'organe de réglage (26, 14, 52, 64, 65) mobile longitudinalement, ce tiroir étant chargé par un ressort (32) en direction d'une position de verrouillage et par une force antagoniste en direction d'une position de déverrouillage et en ce que le tiroir de verrouillage (31, 51, 62) peut verrouiller l'organe de réglage mobile longitudinalement (26, 14, 52, 64, 65) dans n'importe quelle position par une liaison mécanique de force entre les deux parties (26, 14, 52, 64, 31, 51).

2. Vanne continue selon la revendication 1, caractérisée en ce que la liaison de force entre les deux parties (26, 14, 52, 64, 65, 31, 51) se fait suivant un contact linéaire.

3. Vanne continue selon l'une quelconque des revendications 1 et 2, caractérisée en ce que la liaison de force entre les deux parties (51, 52) se fait avec une force de serrage croissante par un effet de coin (55).

4. Vanne continue selon la revendication 3, caractérisée en ce que l'organe de réglage (52) mobile longitudinalement est réalisé au niveau de la liaison de force par un segment conique (57) et la surface de serrage (54) correspondante du tiroir de verrouillage 51 est dirigée en biais par rapport à l'axe longitudinal de l'organe de réglage (52).

5. Vanne continue selon une ou plusieurs des revendications 1 à 4, caractérisée en ce que l'unité de verrouillage (11, 40, 51, 61) est réalisée dans un boîtier (23) particulier par rapport à la vanne (10, 62).

6. Vanne continue selon la revendication 5, caractérisée par un axe de serrage (26, 52) guidé en coulissement dans le boîtier (23), cet axe étant couplé solidairement à l'organe de réglage (14, 65) mobile longitudinalement et traverse le tiroir de verrouillage (31, 51) par une cavité (35, 41, 53) prévue dans le tiroir de verrouillage.

7. Vanne continue selon la revendication 6, caractérisée en ce que la cavité du tiroir de verrouillage (31) est un perçage cylindrique (35) et l'axe de serrage (21) est un goujon cylindrique de diamètre plus petit que celui du premier perçage (35).

8. Vanne continue selon la revendication 6, caractérisée en ce que la cavité (41) du tiroir de verrouillage (31) présente au moins deux surfaces de serrage (42) disposées suivant une forme de V et inclinées l'une vers l'autre qui, en position de verrouillage, s'appliquent contre l'axe de serrage (26) réalisé sous la forme d'un goujon cylindrique.

9. Vanne continue selon la revendication 6, caractérisée en ce que la cavité est une rainure (51) inclinée par rapport à l'axe longitudinal du tiroir de verrouillage (51) et dont les parois latérales créent l'effet de coin en jouant le rôle de surfaces de serrage (54).

10. Vanne continue selon la revendication 9, caractérisée en ce que le segment conique (57) est prévu sur l'axe de serrage (52) et la paroi latérale de serrage (54) présente l'angle d'inclinaison (58) correspondant, pris par rapport à l'axe longitudinal de l'axe de serrage (52).

11. Vanne continue selon l'une des revendications 6 à 10, caractérisée en ce que l'axe de serrage (26, 52, 64) est monté dans le boîtier (23) de part et d'autre du tiroir de verrouillage (31, 51).

12. Vanne continue selon l'une des revendications 6 à 11, caractérisée en ce que le boîtier (23) de l'unité de verrouillage (11, 40, 50, 61) est de forme parallélépipèdique, avec au moins un perçage longitudinal (25) recevant l'axe de serrage (26, 52, 64) ouvert vers une surface frontale (24) formant bride, et un perçage transversal (27) traversant l'axe longitudinal, recevant le tiroir de verrouillage (31, 51), ce perçage transversal étant ouvert du côté d'une surface de montage (28) notamment pour recevoir l'électroaimant de verrouillage (29).

13. Vanne continue selon l'une quelconque des revendications 1 à 12, caractérisée en ce qu'elle comporte un électroaimant proportionnel (13, 63) créant la force d'entraînement de l'organe de réglage mobile longitudinalement.

14. Vanne continue selon la revendication 13, caractérisée en ce que l'unité de verrouillage (11) est montée sur un électroaimant proportionnel (13) d'une vanne de régulation de pression électrohydraulique (10).

15. Vanne continue selon la revendication 13, caractérisée en ce que l'unité de verrouillage (61) d'un distributeur à tiroir proportionnel (61) est prévu entre son unité à vanne (62) et un électroaimant proportionnel (63).

16. Vanne continue selon l'une quelconque des revendications 1 à 15, caractérisée en ce que la force de serrage du ressort (32) est prévue sur l'unité hydraulique (71) qui assiste le tiroir de verrouillage (72).

17. Vanne continue selon la revendication 16, caractérisée en ce que l'unité (71) comporte un piston de pression (73) qui s'appuie dans le boîtier (23) de l'unité de verrouillage (70) et délimite une chambre de pression (74) dans le tiroir de verrouillage (72), chambre reliée par un perçage de commande (75) à la surface enveloppe près du tiroir de verrouillage (72) et le boîtier (23) comporte un canal d'alimentation en fluide sous pression (78) et un canal d'évacuation de fluide sous pression (79), ces canaux pouvant être reliés alternativement au perçage de commande (75) suivant la position du tiroir de verrouillage (72).

18. Vanne continue selon la revendication 17, caractérisée en ce que le perçage de commande (75) forme deux arêtes de commande (76, 77) dans la surface enveloppe, la première arête de commande (76) fermant la liaison vers le canal d'alimentation en fluide sous pression (78) lorsque l'électroaimant de verrouillage (29) est alimenté en courant, par un chevauchement positif alors que la seconde arête de commande (77) présente un chevauchement négatif par rapport au canal d'évacuation de fluide de pression (79).
